# EUROPEAN PATENT APPLICATION

(11) **EP 3 073 082 A1**
(43) Date of publication of application: **28.09.2016**
(21) Application number: 16161998.6
(22) Date of filing: 23.03.2016
(51) Int. Cl.: F01N 3/20, F01N 9/00, F01N 11/00

(54) **SYSTEMS AND METHODS FOR MONITOING THE HEALTH OF A SELECTIVE CATALYTIC REDUCTION CATALYST**

(30) Priority: 26.03.2015 US 201514669934
(71) Applicant: General Electric Company, Schenectady, NY 12345 (US)
(72) Inventor: DEVARAKONDA, Maruthi Narasinga Rao, Waukesha, WI Wisconsin 53188 (US)
(74) Representative: Williams, Andrew Richard

(57) **Abstract**

A system includes a controller (24) programmed to monitor an NH₃ storage state of a selective catalytic reduction (SCR) catalyst (14). The controller is programmed to receive signals representative of NH₃ and/or NO_{X} concentrations in a fluid both upstream of an inlet (18) and downstream of an outlet (20) of the SCR catalyst (14), to receive a signal representative of the measured NH₃ storage of the SCR catalyst from at least one RF probe (38) disposed within the SCR catalyst, to utilize a model to generate an estimated NH₃ storage of the SCR catalyst based at least on the NH₃ and/or NO_{X} concentrations in the fluid both upstream and downstream of the SCR catalyst, to compare the estimated NH₃ storage to the measured NH₃ storage, and to output a control action for the SCR catalyst based on the comparison of the estimated NH₃ storage to the measured NH₃ storage.

## Description

### BACKGROUND

The subject matter disclosed herein relates to an exhaust aftertreatment system for an internal combustion engine and, more specifically, to monitoring the health of a selective catalytic reduction (SCR) catalyst of the exhaust aftertreatment system.

Engines (e.g., internal combustion engines such as reciprocating engines or gas turbines) combust a mixture of fuel and air to generate combustion gases that apply a driving force to a component of the engine (e.g., to move a piston or drive a turbine). Subsequently, the combustion gases exit the engine as an exhaust, which may be subject to exhaust treatment (e.g., aftertreatment) systems that include one or more catalytic converters (e.g., three-way catalyst (TWC) assembly, SCR catalyst assembly, etc.) to reduce the emissions of nitrogen oxides (NO_{X}), hydrocarbons (HC), carbon monoxide (CO), and other emissions. However, if the health (e.g., ammonia (NH₃) storage state) is not closely monitored, over time the effectiveness of the catalysts at reducing emissions may decrease.

### BRIEF DESCRIPTION

Certain aspects commensurate in scope with the originally claimed invention are summarized below. These aspects are not intended to limit the scope of the claimed invention, but rather are intended only to provide a brief summary of possible forms of the invention. Indeed, the invention may encompass a variety of forms that may be similar to or different from the aspects set forth below.

In accordance with a first aspect, a system includes an exhaust aftertreatment system configured to treat emissions from a combustion engine. The exhaust aftertreatment system includes a SCR catalyst assembly configured to receive a fluid from the combustion engine, wherein the SCR catalyst assembly has an inlet and an outlet.

The exhaust aftertreatment system also includes a first sensor disposed upstream of the inlet of the SCR catalyst assembly, a second sensor disposed downstream of the outlet of the SCR catalyst assembly, and at least one radio frequency (RF) probe disposed within the SCR catalyst assembly and configured to measure NH₃ storage of the SCR catalyst assembly. The system also includes a controller communicatively coupled to the exhaust aftertreatment system. The controller is configured to receive a first signal representative of NH₃ concentration or NO_{X} concentration in the fluid upstream of the SCR catalyst assembly from the first sensor, to receive a second signal representative of NH₃ concentration or NO_{X} concentration in the fluid downstream of the SCR catalyst assembly from the second sensor, to receive a third signal representative of the measured NH₃ storage of the SCR catalyst assembly from the at least one RF probe, to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the exhaust aftertreatment system based at least on the comparison of the estimated NH₃ storage to the measured NH₃ storage.

In accordance with a second aspect, a system includes a controller programmed to monitor an NH₃ storage state of a SCR catalyst assembly coupled to a combustion engine. The controller is programmed to receive a first signal representative of NH₃ concentration or NO_{X} concentration in a fluid upstream of an inlet of the SCR catalyst assembly from a first sensor, to receive a second signal representative of NH₃ concentration or NO_{X} concentration in the fluid downstream of the outlet of the SCR catalyst assembly from a second sensor, to receive a third signal representative of a measured NH₃ storage of the SCR catalyst assembly from at least one RF probe disposed within the SCR catalyst assembly, to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the SCR catalyst assembly based at least on the comparison of the estimated NH₃ storage to the measured NH₃ storage.

In accordance with a third aspect, a method for monitoring an NH₃ storage state of a SCR catalyst assembly coupled to a combustion engine is provided. The method includes receiving, at a controller, a first signal representative of NH₃ concentration or NO_{X} concentration in a fluid upstream of the SCR catalyst assembly from a first sensor. The method also includes receiving, at the controller, a second signal representative of NH₃ concentration or NO_{X} concentration in the fluid downstream of the SCR catalyst assembly from a second sensor. The method further includes receiving, at the controller, a third signal representative of a measured NH₃ storage of the SCR catalyst assembly from at least one RF probe disposed within the SCR catalyst assembly. The method even further includes utilizing, via the controller, a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly. The method still further includes comparing, via the controller, the estimated NH₃ storage to the measured NH₃ storage. The method even further includes outputting, via the controller, a control action for the SCR catalyst assembly based at least on the comparison of the estimated NH₃ storage to the measured NH₃ storage.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an exhaust treatment (e.g., aftertreatment) system coupled to an engine; and
FIG. 2 is a flow chart of an embodiment of a computer-implemented method for monitoring the health (e.g., NH₃ storage state) of a catalyst assembly (e.g., SCR catalyst assembly) coupled to an engine.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to systems and methods for monitoring the health (e.g., NH₃ storage state) of a catalyst assembly or catalytic converter (e.g. SCR catalyst assembly) coupled to a combustion engine (e.g., reciprocating internal combustion engine or gas turbine engine). In particular, embodiments of the present disclosure include an aftertreatment (e.g., exhaust treatment) system configured to couple to the combustion engine and to treat emissions (e.g., in the engine exhaust) from the combustion engine (e.g., NO_{X}, HC, CO, etc.). The aftertreatment system may include catalyst based systems, chemical injection systems, or other types. The disclosed embodiments include measuring or obtaining one or more operating parameters (e.g., actual or estimated operating parameters) of the combustion engine, measuring NH₃ and NO_{X} in the fluid (exhaust or treated exhaust) both upstream and downstream of the catalyst assembly via NH₃ and NO_{X} sensors, respectively, and measuring NH₃ storage of the catalyst assembly via one or more RF probes or sensors. The disclosed embodiments include, via a controller (e.g., engine control unit (ECU)), utilizing a model to estimate NH₃ storage of the catalyst assembly from the catalyst assembly based on the measured NH₃ and/or NO_{X} concentrations in the fluid both upstream and downstream of the catalyst assembly and/or the one or more operating parameters of the combustion engine. The controller may also utilize a model to estimate the emissions of certain species (e.g., NO_{X} and NH₃). The controller may compare the estimated NH₃ storage of the SCR catalyst assembly to the measured NH₃ storage of the SCR catalyst assembly. If either the estimated NH₃ storage of the catalyst assembly or one or more of the measured or estimated emissions downstream of the catalyst assembly are not within desired limits, an output control action may be automatically triggered by the controller (e.g., performing a diagnostics module on the catalyst assembly). Monitoring the health (e.g., NH₃ storage state) of the catalyst assembly, via the disclosed techniques, enables use of the combustion engine to remain within emissions compliance for an extended period of time. In addition, maintenance to the catalyst assembly may be minimized. Further, the disclosed embodiments provide an on-board diagnostics capability.

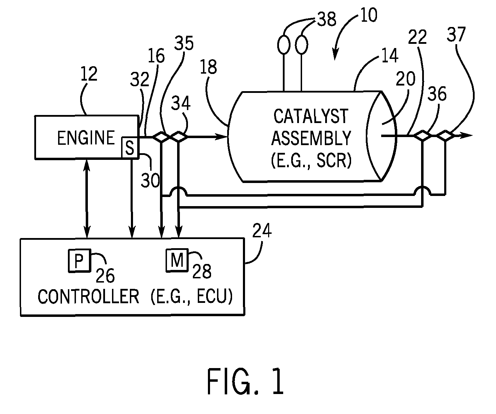

Turning now to the drawings and referring to FIG. 1, a schematic diagram of an aftertreatment system 10 coupled to an engine 12 is illustrated. As described in detail below, the disclosed aftertreatment system 10 monitors the health (e.g., NH₃ storage state) of a catalyst assembly 14 of the aftertreatment system 10 and, if needed, performs diagnostics on the catalyst assembly 14. The engine 12 may include an internal combustion engine such as a reciprocating engine (e.g., multi-stroke engine such as two-stroke engine, four-stroke engine, six-stroke engine, etc.) or a gas turbine engine. The engine 12 may operate on a variety fuels (e.g., natural gas, diesel, syngas, gasoline, blends of fuel (e.g., methane, propane, ethane, etc.), etc.). The engine 12 may operate as a rich-burn engine. The engine 12 may be part of a power generation system that generates power ranging from 10 kW to 10 MW. In some embodiments, the engine 12 may operate at less than approximately 1800 revolutions per minute (RPM). In some embodiments, the engine 12 may operate at less than approximately 2000 RPM, 1900 RPM, 1700 RPM, 1600 RPM, 1500 RPM, 1400 RPM, 1300 RPM, 1200 RPM, 1000 RPM, or 900 RPM. In some embodiments, the engine 12 may operate between approximately 800-2000 RPM, 900-1800 RPM, or 1000-1600 RPM. In some embodiments, the engine 12 may operate at approximately 1800 RPM, 1500 RPM, 1200 RPM, 1000 RPM, or 900 RPM. Exemplary engines 12 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

During operation, the engine 12 generates combustion gases 16 used to apply a driving force to a component of the engine 12 (e.g., one or more pistons reciprocating in cylinders or one more turbines). The combustion gases 16 subsequently exit the engine 12 as an exhaust 16, which includes a variety of emissions (e.g., NOₓ, HC, CO, etc.). The exhaust treatment system 10 treats these emissions to generate milder emissions (carbon dioxide (CO₂) water, etc). As depicted, the exhaust treatment system 10 includes the catalytic converter or catalyst assembly 14. The catalyst assembly 14 (e.g., SCR catalyst assembly) includes an inlet 18 to receive the fluid 16 (e.g., exhaust) from the engine 12 and an outlet 20 to discharge a fluid 22 (e.g., treated engine exhaust). In certain embodiments, the catalyst assembly 14 includes a SCR catalyst assembly. The SCR catalyst assembly, via its catalytic activity, reduces NO_{X} within the fluid 16 via multiple reactions. The NO_{X} may be reduced via NH₃ to generate N₂ and water. In certain embodiments, NO_{X} may be reduced via urea to generate N₂, water, and CO₂. In embodiments that include the SCR catalyst assembly, the engine 12 may be operated as a lean-burn engine (e.g., equivalence ratio (i.e., ratio of actual AFR to stoichiometric AFR), or lambda (λ), value of greater than 1.0 such as approximately 1.001, 1.002, 1.003, 1.004, 1.005, 1.006, 1.007, 1.020, 1.030, 1.040, 1.050, or any other value greater than 1.0) to maximize the catalytic activity in the SCR catalyst assembly. The AFR is the mass ratio of air to fuel. In certain embodiments, the aftertreatment system 10 may include one or more additional catalyst assemblies disposed upstream and/or downstream of the catalyst assembly 14 (e.g., a TWC assembly disposed between the engine 12 and the catalyst assembly 14). In certain embodiments, the aftertreatment system 10 may include other components (e.g., reductant injection system that injects a reductant (e.g., NH₃ or urea) into the fluid 16 downstream of the engine 12 and upstream of the catalyst assembly).

The engine 12 and the aftertreatment system 10 are coupled (e.g., communicatively) to a controller 24 (e.g., an engine control unit (ECU)) that controls and monitors the operations of the engine 12. For example, the controller 24 regulates or adjusts an oxidant-fuel ratio (e.g., air-fuel ratio) of the engine 12. The AFR is the mass ratio of air to fuel. The controller 24 also controls and monitors the operations of the aftertreatment system 10. For example, as described in greater detail below, the controller 24 may monitor the health (e.g., NH₃ storage state) of the catalyst assembly 14 of the aftertreatment system 10 and, if needed, performs diagnostics on the catalyst assembly 14. In certain embodiments, the controller 24 may include multiple controllers in communication with each other (e.g., a respective controller for the engine 12 and the aftertreatment system 10). The controller 24 includes processing circuitry (e.g., processor 26) and memory circuitry (e.g., memory 28). The processor 26 may include multiple microprocessors, one or more "general-purpose" microprocessors, one or more special-purpose microprocessors, and/or one or more application specific integrated circuits (ASICS), system-on-chip (SoC) device, or some other processor configuration. For example, the processor 26 may include one or more reduced instruction set (RISC) processors or complex instruction set (CISC) processors. The processor 26 may execute instructions to carry out the operation of the engine 12 and/or aftertreatment system 10. These instructions may be encoded in programs or code stored in a tangible non-transitory computer-readable medium (e.g., an optical disc, solid state device, chip, firmware, etc.) such as the memory 28. In certain embodiments, the memory 28 may be wholly or partially removable from the controller 24.

The memory 28 may store various tables (e.g., look-up tables (LUT)). The memory 28 may store a LUT listing corresponding voltages (e.g., similar to voltage readings received from the RF probes 38) to NH₃ storage values (e.g., θ, which represents NH₃ storage ratio in SCR catalyst assembly). Also, the memory 28 may store a number of thresholds or ranges. For example, the memory 28 may store thresholds and/or ranges for various emissions (e.g., NOₓ, NH₃, etc.) representing desired limits. The memory 28 may also store nominal or minimal differences (e.g., thresholds) for a difference between an estimated NH₃ storage value for the catalyst assembly 14 (e.g., SCR catalyst assembly) and a measured NH₃ storage value for the catalyst assembly 14 (e.g., measured by the RF probes 38). The memory 28 may also store models (e.g., software models representing and/or simulating various aspects of the engine 12, the aftertreatment system 10, and/or each of their components). For example, the memory 28 may store one or more models to estimate engine operating parameters. In other embodiments, the memory 28 may store one or more models to estimate the NH₃ storage state of the catalyst assembly 14. The memory 28 may also store one or more models to estimate the concentration of various emissions (e.g., NOₓ, NH₃, etc.). The one or models may utilize measurements of the NH₃ and/or NO_{X} concentrations (e.g., received from NH₃ sensors 35, 36 and NO_{X} sensors 34, 37, respectively) in the fluid 16, 22 upstream and downstream of the catalyst assembly 14 (e.g., SCR catalyst assembly) and/or one or more engine operating parameters (e.g., actual engine operating parameters and/or estimated engine operating parameters such as obtained via models) to estimate the NH₃ storage state of the catalyst assembly 14 and/or the concentration of various emissions (e.g., NOₓ, NH₃, etc.) exiting the catalyst assembly 14. The controller 22 receives one or more inputs signals (input₁ .. . inputₙ) from sensors, actuators, and other components (e.g., user interface) of engine 12 and the aftertreatment system 10 and outputs one or more output signals (output₁ .. . outputₙ) to the sensors, actuators, and other components of the engine 12 and/or the system 10. The controller 22 may utilize one or more types of models (e.g., software-based models executable by a processor). For the example, the models may include physics-based models such as low cycle fatigue (LCF) life prediction models, computational fluid dynamics (CFD) models, finite element analysis (FEA) models, solid models (e.g., parametric and non-parametric modeling), and/or 3-dimension to 2-dimension FEA mapping models that may be used to predict the risk of equipment malfunction or the need for equipment maintenance. The models may also include statistical models, such as regression analysis models, data mining models (e.g., clustering models, classification models, association models), and the like. For example, clustering techniques may discover groups or structures in the data that are in some way "similar". Classification techniques may classify data points as members of certain groups, for example, field device having a higher probability of encountering an unplanned maintenance event. Regression analysis may be used to find functions capable of modeling future trends within a certain error range. Association techniques may be used to find relationship between variables. Also, fuzzy logic models may be utilized. Also, the data utilized with the models may include historical data, empirical data, knowledge-based data, and so forth.

The controller 24 may be coupled to sensors associated with the engine 12 and the exhaust treatment system 10. For example, the engine 12 may include one or more sensors 30 disposed on the engine 12, within the engine 12, and/or adjacent an outlet 32 of the engine 12 that measure one or more operating parameters (e.g., actual operating parameters) of the engine 12. The sensors 30 may include atmospheric and engine sensors, such as pressure sensors, temperature sensors, speed sensors, and so forth. In certain embodiments, the sensors 30 may measure the concentration of different species (e.g., emissions) in the fluid 16 exiting the engine 12. For example, the sensors 30 may include but are not limited to O₂ or lambda sensors, engine air intake temperature sensor, engine air intake pressure sensor, jacket water temperature sensor, engine exhaust temperature sensor, and engine exhaust pressure sensor. In addition, one or more NH₃ sensors 35 may be disposed upstream of the inlet 18 of the catalyst assembly 14 (e.g., between the engine 12 and the catalyst assembly 14) to measure a concentration or an amount of NH₃ in the fluid 16. Further, one or more NH₃ sensors 36 may be disposed downstream of the outlet 20 of the catalyst assembly 14 to measure a concentration or an amount of NH₃ in the fluid 22. Yet further, one or more NO_{X} sensors 34 may be disposed upstream of the inlet 18 of the catalyst assembly 14 (e.g., between the engine 12 and the catalyst assembly 14) to measure a concentration or an amount of NO_{X} in the fluid 16. Still further, one or more NO_{X} sensors 37 may be disposed downstream of the outlet 20 of the catalyst assembly 14 to measure a concentration or an amount of NO_{X} in the fluid 22. In certain embodiments, only one or more NH₃ sensors 35 may be disposed upstream of the catalyst assembly 14 (i.e., without NO_{X} sensors 34 disposed upstream), while only one or more NO_{X} sensors 37 may be disposed downstream of the catalyst assembly (i.e., without NH₃ sensors 36 disposed downstream). In other embodiments, only one or more NO_{X} sensors 34 may be disposed upstream of the catalyst assembly 14 (i.e., without NH₃ sensors 35 disposed upstream), while only one or more NH₃ sensors 36 may be disposed downstream of the catalyst assembly (i.e., without NO_{X} sensors 37 disposed downstream). Even further, one or more RF probes or sensors 38 may be disposed within or coupled to the catalyst assembly 14 to measure NH₃ storage of the catalyst assembly 14. In certain embodiments, the NH₃ storage measurement from the RF probes 38 may take the form of a voltage reading. In certain embodiments, the voltage reading may be converted to an NH₃ storage value, θ (e.g., utilizing a LUT).

Based at least on feedback from the sensors 30, the NH₃ sensors 35, 36 and/or the NO_{X} sensors 34, 37, and the one or more RF probes 38, the controller 24 monitors the health (e.g., NH₃ storage state) of the catalyst assembly 14 of the aftertreatment system 10 and, if needed, performs diagnostics on the catalyst assembly 14. For example, the controller 22 utilizes one or more engine operating parameters (e.g. actual operating parameters measured by the sensors 30 and/or estimated operating parameters) and the measured NH₃ and/or NO_{X} concentrations (e.g., received from the NH₃ sensors 35, 36 and the NO_{X} sensors 34, 37, respectively) upstream and downstream of the catalyst assembly 14 in a model (e.g., software-based model) to generate an estimate of the NH₃ storage state of the catalyst assembly 14 and/or estimates of emissions (e.g., NOₓ, NH₃, etc.) exiting the catalyst assembly 14. In certain embodiments, the measured NH₃ concentration upstream of the catalyst assembly 14 and the measured NO_{X} concentration downstream of the catalyst assembly 14 may be utilized in the model to generate the estimated NH₃ storage state of the catalyst assembly 14 and/or the estimated NH₃ emissions exiting the catalyst assembly 14. In other embodiments, the measured NO_{X} concentration upstream of the catalyst assembly 14 and the measured NH₃ concentration downstream of the catalyst assembly 14 may be utilized in the model to generate the estimated NH₃ storage state of the catalyst assembly 14 and/or the estimated NO_{X} emissions exiting the catalyst assembly 14. In yet other embodiments, the measured NH₃ concentrations both upstream and downstream of the catalyst assembly 14 may be utilized in the model to generate the estimated NH₃ storage state of the catalyst assembly 14 and/or the estimated NO_{X} emissions exiting the catalyst assembly 14. In still other embodiments, the measured NO_{X} concentrations both upstream and downstream of the catalyst assembly 14 may be utilized in the model to generate the estimated NH₃ storage state of the catalyst assembly 14 and/or the estimated NH₃ emissions exiting the catalyst assembly 14. The controller 24 may compare an estimated NH₃ storage to a measured NH₃ storage (e.g., based on feedback from the RF probes 38) for the catalyst assembly 14. If the difference between the estimated NH₃ storage and the measured NH₃ storage of the catalyst assembly 14 is significant (e.g., greater than a desired threshold such as 2 percent, 5 percent, 10 percent, or any other desired percentage), the controller 24 may perform a diagnostics module (e.g., SCR catalyst assembly diagnostics module) on the catalyst assembly 14. In certain embodiments, the controller 24 may also provide a user perceptible indication (e.g., audible, visual, textual, etc.) of the detected difference in NH₃ storage and the performance of the diagnostics module. If the difference between the estimated NH₃ storage and the measured NH₃ storage of the catalyst assembly 14 is equal to or less than the desired threshold, the controller 24 may compare the emissions (e.g., measured and/or estimated) exiting the catalyst assembly 14 (e.g., NH₃, NOₓ, etc.) to respective thresholds and/or ranges to determine if the emissions are within acceptable or desired limits. If either the NH₃ or NO_{X} are not within the acceptable or desired limits (i.e., out of the range or above the threshold), the controller 24 may still perform a diagnostics module (e.g., SCR catalyst assembly diagnostics module) on the catalyst assembly 14. Monitoring the health (e.g., NH₃ storage state) of the catalyst assembly 14, via the disclosed techniques, enables use of the combustion engine 12 to remain within emissions compliance for an extended period of time. In addition, maintenance to the catalyst assembly 14 may be minimized. Further, the disclosed techniques provide an on-board diagnostics capability.

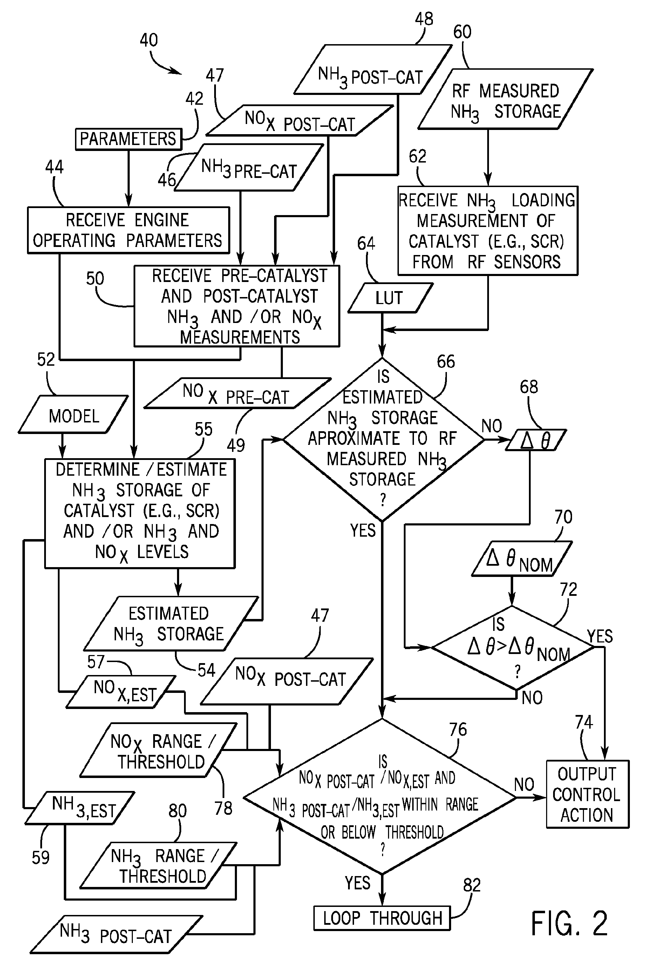

FIG. 2 is a flow chart of an embodiment of a computer-implemented method 40 for monitoring the health (e.g., NH₃ storage state) of the catalyst assembly 14 (e.g., SCR catalyst assembly) coupled to the engine 12. All or some of the steps of the method 40 may be executed by the controller 24 (e.g., utilizing the processor 26 to execute programs and access data stored on the memory 28). In addition, one or more of these steps may be performed simultaneously with other steps. The method 40 includes receiving engine operating parameters 42 or signals representative of these parameters 42 (block 44). The engine operating parameters 42 may include actual engine operating parameters measured by one or more sensors 30 associated with the engine 12. The engine operating parameters 42 may also include estimates of engine operating parameters estimated, for example, utilizing one or more models as described above. The method 40 may also include receiving pre-catalyst 46 (NH_{3 PRE-CAT}) and/or post-catalyst 48 (NH_{3 POST-CAT}) NH₃ measurements or signals representative of these measurements (e.g., from NH₃ sensors 35, 36) (block 50). In addition, the method 40 may include receiving pre-catalyst 47 (NO_{X PRE-CAT}) and/or post-catalyst 49 (NO_{X POST-CAT}) NO_{X} measurements or signals representative of these measurements (e.g., from NO_{X} sensors 34, 37) (block 50). The method 40 further includes utilizing one or more models 52 to determine or estimate the oxidative state (e.g., estimated NH₃ storage 54, θ) of the catalyst assembly 14, NO_{X} 57 (NO_{X, EST}) in the fluid 22 exiting the catalyst assembly 14, and/or NH₃ 59 (NH₃, _{EST}) in the fluid 22 exiting the catalyst assembly 14.

The method 40 includes receiving a measurement or signal representative of the measurement of NH₃ storage loading 60 (e.g., from RF probes 38) of the catalyst assembly 14 (block 62). In certain embodiments, a LUT 64 that includes voltages (e.g., similar to the voltage readings received from the RF probes 38) corresponding to NH₃ storage values (e.g., θ, which represents NH₃ storage ratio in SCR catalyst assembly) may be utilized to convert the measurement from the RF probes 38 to the NH₃ storage value. The method 40 also includes comparing the estimated NH₃ storage 54 value to the measured NH₃ storage value 60. In certain embodiments, the comparison may include initially determining if the estimated NH₃ storage value 54 is approximately equal to the measured NH₃ storage value 60 (block 66). If the estimated NH₃ storage value 54 is not approximately equal (e.g., having a difference greater than 1 percent) to the measured NH₃ storage value 60, the method 40 includes utilizing a difference 68, Δθ, between the estimated NH₃ storage 54 and the measured NH₃ storage value 60 and comparing it to a nominal or threshold difference 70, Δθ_{NOM} (block 72). The Δθ_{NOM} may be 2 percent, 5 percent, 10 percent, or any other desired percentage difference between the estimated NH₃ storage 54 and the measured NH₃ storage 60. If the Δθ is greater than Δθ_{NOM}, the method 40 includes outputting a control action (block 74). The control action may include performing a diagnostics module (e.g., measuring a pressure drop across the catalyst assembly 14) on the catalyst assembly 14 (e.g., SCR catalyst assembly diagnostics module). The control action may also include providing a user perceptible indication (e.g., audible, visual, textual, etc.) of the detected Δθ being greater than Δθ_{NOM} and/or the performance of the diagnostics module. In certain embodiments, block 66 may be skipped and the method 40 may automatically proceed to block 72.

If either the estimated NH₃ storage 54 value is approximately equal (e.g., equal to or less than 1 percent) to the measured NH₃ storage value 60 or the Δθ is less than Δθ_{NOM}, the method 40 includes determining if NO_{X POST-CAT} 47 or NO_{X}, _{EST} 57 and/or NH_{3 POST-CAT} 48 or NH₃, _{EST} 59 are within desired limits (block 76). Specifically, the method 40 includes determining if NO_{X POST-CAT} 47 or NO_{X}, _{EST} 57 is less than a desired NO_{X} threshold or within a desired NO_{X} range 78. The method 40 also includes determining if NH_{3 POST-CAT} 48 or NH₃, _{EST} 59 is less than a desired NH₃ threshold or within a desired NH₃ range 80. If both NO_{X POST-CAT} 47 or NO_{X}, _{EST} 57 and NH_{3 POST-CAT} 48 or NH₃, _{EST} 59 fall within their respective desired ranges 78, 80 or below their respective desired thresholds 78, 80, the method 40 includes looping thru the method 40 from the beginning (block 82). If either NO_{X POST-CAT} 47/NO_{X}, _{EST} 57 or NH_{3 POST-CAT} 48/NH₃, _{EST} 59 fall out of their respective desired ranges 78, 80 or are equal or greater than their respective desired thresholds 78, 80, the method 40 includes outputting a control action (block 74) as described above.

Beneficial effects of the disclosed embodiments include providing (e.g., computer implemented) systems and methods for monitoring the health (e.g., NH₃ storage state) of the catalyst assembly 14 (e.g. SCR catalyst assembly) coupled to the combustion engine 12. In particular, embodiments include utilizing engine operating parameters 42 and NH₃ and/or NO_{X} concentration measurements in the fluid 16, 22 upstream and downstream of the catalyst assembly 14 as inputs in a model to generate estimates of NH₃ storage in the catalyst assembly 14. Embodiments also include comparing the estimated NH₃ storage to a measured NH₃ storage (e.g., based on measurements from RF probes 38 within the catalyst assembly 14) to determine the health of the catalyst assembly 14. Embodiments further include comparing the estimated or measured emissions to respective ranges and/or thresholds to determine if the estimated or measured emissions are within limits to determine the health of the catalyst assembly 14. Monitoring the health (e.g., NH₃ storage state) of the catalyst assembly 14, via the disclosed embodiments, enables use of the combustion engine 12 to remain within emissions compliance for an extended period of time. In addition, maintenance to the catalyst assembly 14 may be minimized. Further, the disclosed embodiments provide an on-board diagnostics capability.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system, comprising:
   an exhaust aftertreatment system configured to treat emissions from a combustion engine, wherein the exhaust aftertreatment system comprises:
      a selective catalytic reduction (SCR) catalyst assembly configured to receive a fluid from the combustion engine, wherein the SCR catalyst assembly has an inlet and an outlet;
      a first sensor disposed upstream of the inlet of the SCR catalyst assembly;
      a second sensor disposed downstream of the outlet of the SCR catalyst assembly; and
      at least one radio frequency (RF) probe disposed within the SCR catalyst assembly and configured to measure NH₃ storage of the SCR assembly; and
   a controller communicatively coupled to the exhaust aftertreatment system, wherein the controller is configured to receive a first signal representative of NH₃ concentration or the NO_{X} concentration in the fluid upstream of the SCR catalyst assembly from the first sensor, to receive a second signal representative of NH₃ concentration or the NO_{X} concentration in the fluid downstream of the SCR catalyst assembly from the second sensor, to receive a third signal representative of the measured NH₃ storage of the SCR catalyst assembly from the at least one RF probe, to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the exhaust aftertreatment system based at least on the comparison of the estimated NH₃ storage to the measured NH₃ storage.
2. The system of clause 1, wherein the controller is configured to receive one or more operational parameters of the combustion engine, and to utilize the model to generate the estimated NH₃ storage of the SCR catalyst assembly based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.
3. The system of clause 1 or 2, wherein the controller is configured to compare the estimated NH₃ storage to the measured NH₃ storage by determining a difference between the estimated NH₃ storage and the measured NH₃ storage, and determining if the difference is greater than a threshold difference.
4. The system of any preceding clause, wherein the controller is configured to perform a diagnostics module for the SCR catalyst assembly if the difference is greater than the threshold difference.
5. The system of any preceding clause, wherein the second sensor comprises a NO_{X} sensor, and wherein the controller is configured to determine if the NO_{X} concentration in the fluid downstream of the SCR catalyst assembly is within a NO_{X} concentration range or below a NO_{X} concentration threshold if the difference is less than or equal to the threshold difference.
6. The system of any preceding clause, wherein the controller is configured to perform the diagnostics module for the SCR catalyst assembly if the NO_{X} concentration is not within the NO_{X} concentration range or below the NO_{X} concentration threshold.
7. The system of any preceding clause, wherein the second sensor comprises an NH₃ sensor, and wherein the controller is configured to determine if the NH₃ concentration in the fluid downstream of the SCR catalyst assembly is within an NH₃ concentration range or below an NH₃ concentration threshold if the difference is less than or equal to the threshold difference.
8. The system of any preceding clause, wherein the controller is configured to perform the diagnostics module for the SCR catalyst assembly if the NH₃ concentration is not within the NH₃ concentration range or below the NH₃ concentration threshold.
9. The system of any preceding clause, comprising the combustion engine coupled to the exhaust aftertreatment system.
10. A system, comprising:
   a controller programmed to monitor an ammonia (NH₃) storage state of a selective catalytic reduction (SCR) catalyst assembly coupled to a combustion engine, wherein the controller is programmed to receive a first signal representative of NH₃ concentration or nitrogen oxides (NO_{X}) concentration in a fluid upstream of an inlet of the SCR catalyst assembly from a first sensor, to receive a second signal representative of NH₃ concentration or NO_{X} concentration in the fluid downstream of an outlet of the SCR catalyst assembly from a second sensor, to receive a third signal representative of a measured NH₃ storage of the SCR catalyst assembly from at least one radio frequency (RF) probe disposed within the SCR catalyst assembly, to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the SCR catalyst assembly based at least on the comparison of the estimated NH₃ storage to the measured NH₃ storage.
11. The system of any preceding clause, wherein the controller is programmed to receive one or more operational parameters of the combustion engine, and to utilize the model to generate the estimated NH₃ storage of the SCR catalyst assembly based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.
12. The system of any preceding clause, wherein the controller is programmed to compare the estimated NH₃ storage to the measured NH₃ storage by determining a difference between the estimated NH₃ storage and the measured NH₃ storage, and to determine if the difference is greater than a threshold difference.
13. The system of any preceding clause, wherein the controller is programmed to perform a diagnostics module for the SCR catalyst assembly if the difference is greater than the threshold difference.
14. The system of any preceding clause, wherein the second sensor comprises a NO_{X} sensor, and wherein the controller is programmed to determine if the NO_{X} concentration in the fluid downstream of the SCR catalyst assembly is within a NO_{X} concentration range or below a NO_{X} concentration threshold if the difference is less than or equal to the threshold difference.
15. The system of any preceding clause, wherein the controller is programmed to perform the diagnostics module for the SCR catalyst assembly if the NO_{X} concentration is not within the NO_{X} concentration range or below the NO_{X} concentration threshold.
16. The system of any preceding clause, wherein the second sensor comprises an NH₃ sensor, and wherein the controller is programmed to determine if the NH₃ concentration in the fluid downstream of the SCR catalyst assembly is within an NH₃ concentration range or below an NH₃ concentration threshold if the difference is less than or equal to the threshold difference.
17. The system of any preceding clause, wherein the controller is programmed to perform the diagnostics module for the SCR catalyst assembly if the NH₃ concentration is not within the NH₃ concentration range or below the NH₃ concentration threshold.
18. A method for monitoring an ammonia (NH₃) storage state of a selective catalytic reduction (SCR) catalyst assembly coupled to a combustion engine, comprising:
   receiving, at a controller, a first signal representative of NH₃ concentration or nitrogen oxides (NOₓ) concentration in a fluid upstream of an inlet of the SCR catalyst assembly from a first sensor;
   receiving, at the controller, a second signal representative of NH₃ concentration or NO_{X} concentration in the fluid downstream of an outlet of the SCR catalyst assembly from a second sensor;
   receiving, at the controller, a third signal representative of a measured NH₃ storage of the SCR catalyst assembly from at least one radio frequency (RF) probe disposed within the SCR catalyst assembly;
   utilizing, via the controller, a model to generate an estimated NH₃ storage of the SCR catalyst assembly based at least on the NH₃ concentration or the NO_{X} concentration in the fluid upstream of the SCR catalyst assembly and the NH₃concentration or the NO_{X} concentration in the fluid downstream of the SCR catalyst assembly;
   comparing, via the controller, the estimated NH₃ storage to the measured NH₃ storage; and
   outputting, via the controller, a control action for the SCR catalyst assembly based at least on the comparison of the estimated NH₃ storage to the measured NH₃ storage.
19. The method of any preceding clause, comprising receiving, at the controller, one or more operational parameters of the combustion engine, and utilizing, via the controller, the model to generate the estimated NH₃ storage of the SCR catalyst assembly based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.
20. The method of any preceding clause, comprising comparing, via the controller, the estimated NH₃ storage to the measured NH₃ storage by determining a difference between the estimated NH₃ storage and the measured NH₃ storage, and determining if the difference is greater than a threshold difference.

## Claims

1. A system, comprising:
an exhaust aftertreatment system (10) configured to treat emissions (16) from a combustion engine (12), wherein the exhaust aftertreatment system comprises:
a selective catalytic reduction (SCR) catalyst assembly (14) configured to receive a fluid (16) from the combustion engine (12), wherein the SCR catalyst assembly has an inlet (18) and an outlet (20);
a first sensor disposed (34,35) upstream of the inlet (18) of the SCR catalyst assembly (14);
a second sensor (36,37) disposed downstream of the outlet (20) of the SCR catalyst assembly (14); and
at least one radio frequency (RF) probe (38) disposed within the SCR catalyst assembly (14) and configured to measure NH₃ storage of the SCR assembly; and
a controller (24) communicatively coupled to the exhaust aftertreatment system (10), wherein the controller is configured to receive a first signal representative of NH₃ concentration or the NO_{X} concentration in the fluid upstream of the SCR catalyst assembly from the first sensor (34,35), to receive a second signal representative of NH₃ concentration or the NO_{X} concentration in the fluid downstream of the SCR catalyst assembly from the second sensor (36,37), to receive a third signal representative of the measured NH₃ storage of the SCR catalyst assembly from the at least one RF probe (38), to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the exhaust aftertreatment system based at least on the comparison of the estimated NH₃ storage to the measured NH₃ storage.

2. The system of claim 1, wherein the controller (24) is configured to receive one or more operational parameters of the combustion engine (12), and to utilize the model to generate the estimated NH₃ storage of the SCR catalyst assembly (14) based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.

3. The system of either of claim 1 or 2, wherein the controller (24) is configured to compare the estimated NH₃ storage to the measured NH₃ storage by determining a difference between the estimated NH₃ storage and the measured NH₃ storage, and determining if the difference is greater than a threshold difference.

4. The system of claim 3, wherein the controller (24) is configured to perform a diagnostics module for the SCR catalyst assembly (14) if the difference is greater than the threshold difference.

5. The system of claim 4, wherein the second sensor comprises a NO_{X} sensor (37), and wherein the controller (24) is configured to determine if the NO_{X} concentration in the fluid downstream of the SCR catalyst assembly (14) is within a NO_{X} concentration range or below a NO_{X} concentration threshold if the difference is less than or equal to the threshold difference.

6. The system of claim 5, wherein the controller (24) is configured to perform the diagnostics module for the SCR catalyst assembly (14) if the NO_{X} concentration is not within the NO_{X} concentration range or below the NO_{X} concentration threshold.

7. The system of any of claims 4 to 6, wherein the second sensor comprises an NH₃ sensor (36), and wherein the controller (24) is configured to determine if the NH₃ concentration in the fluid downstream of the SCR catalyst assembly (14) is within an NH₃ concentration range or below an NH₃ concentration threshold if the difference is less than or equal to the threshold difference.

8. The system of claim 7, wherein the controller (24) is configured to perform the diagnostics module for the SCR catalyst assembly (14) if the NH₃ concentration is not within the NH₃ concentration range or below the NH₃ concentration threshold.

9. The system of any preceding claim, comprising the combustion engine (12) coupled to the exhaust aftertreatment system (10).

10. A system, comprising:
a controller (24) programmed to monitor an ammonia (NH₃) storage state of a selective catalytic reduction (SCR) catalyst assembly (14) coupled to a combustion engine (12), wherein the controller (24) is programmed to receive a first signal representative of NH₃ concentration or nitrogen oxides (NOₓ) concentration in a fluid upstream of an inlet (18) of the SCR catalyst assembly (14) from a first sensor (34,35), to receive a second signal representative of NH₃ concentration or NO_{X} concentration in the fluid downstream of an outlet of the SCR catalyst assembly from a second sensor (36,37), to receive a third signal representative of a measured NH₃ storage of the SCR catalyst assembly from at least one radio frequency (RF) probe (38) disposed within the SCR catalyst assembly, to utilize a model to generate an estimated NH₃ storage of the SCR catalyst assembly based at least on the NH₃ concentration or the NO_{X} concentration in the fluid upstream of the SCR catalyst assembly and the NH₃ concentration or the NO_{X} concentration in the fluid downstream of the SCR catalyst assembly, to compare the estimated NH₃ storage to the measured NH₃ storage, and to output a control action for the SCR catalyst assembly based at least on the comparison of the estimated NH₃ storage to the measured NH₃ storage.

11. The system of claim 10, wherein the controller (24) is programmed to receive one or more operational parameters of the combustion engine (12), and to utilize the model to generate the estimated NH₃ storage of the SCR catalyst assembly (14) based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.

12. The system of claim 11, wherein the controller (24) is programmed to compare the estimated NH₃ storage to the measured NH₃ storage by determining a difference between the estimated NH₃ storage and the measured NH₃ storage, and to determine if the difference is greater than a threshold difference.

13. A method for monitoring an ammonia (NH₃) storage state of a selective catalytic reduction (SCR) catalyst assembly coupled to a combustion engine, comprising:
receiving, at a controller (24), a first signal representative of NH₃ concentration or nitrogen oxides (NO_{X}) concentration in a fluid (16) upstream of an inlet (18) of the SCR catalyst assembly (14) from a first sensor (34,35);
receiving, at the controller (24), a second signal representative of NH₃ concentration or NO_{X} concentration in the fluid downstream of an outlet (20) of the SCR catalyst assembly (14) from a second sensor (36,37);
receiving, at the controller (24), a third signal representative of a measured NH₃ storage of the SCR catalyst assembly (14) from at least one radio frequency (RF) probe (38) disposed within the SCR catalyst assembly (14);
utilizing, via the controller (24), a model to generate an estimated NH₃ storage of the SCR catalyst assembly based at least on the NH₃ concentration or the NO_{X} concentration in the fluid upstream of the SCR catalyst assembly and the NH₃concentration or the NO_{X} concentration in the fluid downstream of the SCR catalyst assembly;
comparing, via the controller, the estimated NH₃ storage to the measured NH₃ storage; and
outputting, via the controller, a control action for the SCR catalyst assembly based at least on the comparison of the estimated NH₃ storage to the measured NH₃ storage.

14. The method of claim 13, comprising receiving, at the controller (24), one or more operational parameters of the combustion engine (12), and utilizing, via the controller, the model to generate the estimated NH₃ storage of the SCR catalyst assembly (14) based on the one or more operational parameters, the NH₃ concentration or the NO_{X} concentration in the fluid upstream of the SCR catalyst assembly, and the NH₃ concentration or the NO_{X} concentration in the fluid downstream of the SCR catalyst assembly.

15. The method of claim 14, comprising comparing, via the controller (24), the estimated NH₃ storage to the measured NH₃ storage by determining a difference between the estimated NH₃ storage and the measured NH₃ storage, and determining if the difference is greater than a threshold difference.
